# EUROPEAN PATENT SPECIFICATION

(11) **EP 3 340 094 B1**
(45) Date of publication and mention of the grant of the patent: **28.04.2021**
(21) Application number: 16206449.7
(22) Date of filing: 22.12.2016
(51) Int. Cl.: G06F 21/14, G06F 9/44, H04L 9/08, H04L 9/32, H04L 9/00, H04L 29/06

(54) **METHOD FOR RENEWAL OF CRYPTOGRAPHIC WHITEBOXES UNDER BINDING OF NEW PUBLIC KEY AND OLD IDENTIFIER**
VERFAHREN ZUR VERLÄNGERUNG VON KRYPTOGRAPHISCHEN WEISSBOXEN UNTER VERBINDUNG VON NEUEM ÖFFENTLICHEN SCHLÜSSEL UND ALTEN IDENTIFIEREN
PROCEDE DE RENOUVELLEMENT DE WHITEBOX CRYPTOGRAPHIQUE EN VERTU DE LA NOUVELLE CLE PUBLIQUE ET DE L'ANCIEN IDENTIFICATEUR

(43) Date of publication of application: 27.06.2018
(73) Proprietor: Mastercard International Incorporated, Purchase NY 10577 (US)
(72) Inventor: MUSHING, Alan, Northwich Cheshire CW9 6PX (GB); ROBERTS, David Anthony, Warrington WA4 5RD (GB); THOMPSON, Susan, Nantwich Cheshire CW5 8LR (GB)
(74) Representative: Lawrence, Richard Anthony

(56) References cited:
- WO-A2-2006/115532
- US-A1- 2015 248 668

## Description

### Field of Invention

The present invention relates to management of cryptographic systems. Embodiments are particularly relevant to cryptographic systems used by applications on a device such as a mobile phone. In particular cases of interest, the cryptographic systems use white box cryptography.

### Background of Invention

Many applications require the use of secrets and cryptographic techniques to establish secure pathways between system elements and to allow one system element to trust information as being verified by a trusted party. Cryptography is employed to an increasing extent in applications on mobile devices (such as mobile telephone handsets, tablets and laptop computers). In conventional arrangements, cryptographic functions and secrets are maintained in a physically and logically separated area to protect them against attack. In other arrangements, the cryptographic functionality is not provided in separate hardware, but is provided in a separate operating environment logically separated from a main operating environment.

While these approaches provide some security against subversion in a normal operating environment, they may be costly (where separate hardware is required) or inflexible (if an application functionality needs to be divided between the normal operating environment and a secure operating environment. One approach that may be used entirely within a normal operating system environment is to use white box cryptography. White box cryptography (also referred to as "white-box cryptography" or "WBC") implements a cryptographic algorithm in software in such a way that, in the event of an attack, cryptographic assets and secrets remain secure. In white box cryptography, all information related to the key is obfuscated so that for each secret key, software is implemented so that the key input is unnecessary. As they exist within a normal operating environment and so are at risk of subversion, to maintain an acceptable level of security white box cryptographic instantiation (hereafter "white box") needs to be refreshed occasionally. In conventional arrangements, when refreshed, a new white box is delivered to the mobile device.

The existing white box is in use, and will be managing existing communication pathways and retained or verified information under an existing key. It is desirable to change the key because if it remains the same, then benefits of the change may be lost. A conventional solution would be to program the new white box with both a new key and the existing key; however this would require that the system that creates new white boxes would need to manage keys for all white boxes. It would be desirable to manage this process to allow a new white box to replace an old one more effectively.

WO 2006/115532 A1 describes a method for providing a protected computing environment, the method comprising separating out a protected environment management component from a kernel of a computing device, providing identification information as a part of the protected environment management component, and providing individualization information as part of the protected environment management component.

### Summary of Invention

The described embodiments are to be considered only as illustrative and not restrictive. The scope of the invention is defined by the appended claims, the dependent claims define further embodiments of the invention. In a first aspect, the invention provides a method of transferring secrets from a first cryptographic system installed on a computing device to a second cryptographic system installed on the computing device to enable the second cryptographic system to replace the first cryptographic system, where the first cryptographic system has an identity, and wherein a trusted party is trusted by the first cryptographic system at least and has a trusted party private key and a corresponding trusted party public key, the method comprising: the second cryptographic system providing a signature under the trusted party private key of the first cryptographic system identity and a second cryptographic system public key, the second cryptographic system having a corresponding second cryptographic system private key; the first cryptographic system confirming that the signature comprises the identity, and either: the first cryptographic system using a first cryptographic system private key and the corresponding second cryptographic system public key to establish a shared secret with the second cryptographic system; or the second cryptographic system using the second cryptographic system private key and a corresponding first cryptographic system public key to establish a shared secret with the first cryptographic system; and the first cryptographic system and the second cryptographic system using the shared secret to transfer one or more secrets from the first cryptographic system to the second cryptographic system, the one or more secrets being decrypted before transfer; wherein an application installed on the computing device initially uses the first cryptographic system to perform at least one secure operation using the one or more secrets, and wherein the method further comprises the second cryptographic system replacing the first cryptographic system in performing the at least one secure operation; and wherein the first and second cryptographic systems are white boxes in which keys and secrets are obfuscated.

This approach has particular value when used with applications on the computing device. In one case, an application installed on the computing device initially uses the first cryptographic system to perform at least one secure operation using the one or more secrets, and wherein the method further comprises the second cryptographic system replacing the first cryptographic system in performing the at least one secure operation. The installed application may be a payment application, for example one which uses EMV protocols.

This method of transferring secrets has particular value where the first and second cryptographic systems are white boxes in which keys and secrets are obfuscated. In such a case, the second cryptographic system may obfuscate the secrets when received from the first cryptographic system.

In some cases, the first cryptographic system may be deleted after the secrets have been transferred to the second cryptographic system.

In embodiments, key pairs may be created using elliptic curve techniques.

In embodiments, the shared secret is established using a Diffie-Hellman protocol.

In embodiments, the shared secret is used to transfer the one or more secrets using an Integrated Encryption Scheme implementation.

In a second aspect, the invention provides a computing device comprising a processor and a memory with a first cryptographic system installed thereon, wherein the computing device is adapted to transfer secrets from the first cryptographic system to a second cryptographic system installed thereon, wherein the first and second cryptographic systems are white boxes in which keys and secrets are obfuscated, by the method described above.

Such a computing device may further comprise an application installed on the computing device, wherein the application is adapted to use the first cryptographic system to perform at least one secure operation using the one or more secrets, and wherein the computing device is adapted for the second cryptographic system to replace the first cryptographic system in performing the at least one secure operation. This installed application may be a payment application, for example using EMV protocols.

The first and second cryptographic systems in the computing device may be white boxes in which keys and secrets are obfuscated.

### Brief Description of Figures

Embodiments of the invention will now be described, by way of example, with reference to the accompanying Figures, of which:
Figure 1 shows a computing device - in the embodiment shown, a mobile telephone handset - suitable for implementing an embodiment of the invention;
Figure 2 shows a transaction ecosystem using EMV protocols in which computing devices using embodiments of the invention may be deployed;
Figure 3 illustrates schematically method steps in an embodiment of the invention;
Figures 4A to 4E illustrate the changes to a computing environment in which an embodiment of the invention is used to replace a first cryptographic system with a second cryptographic system; and
Figure 5 illustrates schematically method steps for white box refresh for an application on a computing device achieved by replacing a first white box by a second white box and transferring secrets according to an embodiment of the invention.

### Description of Specific Embodiments

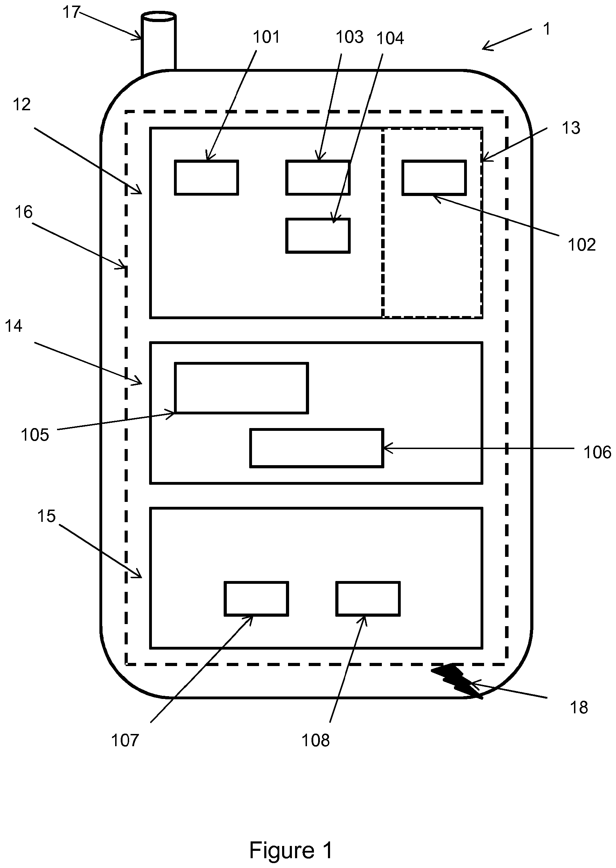

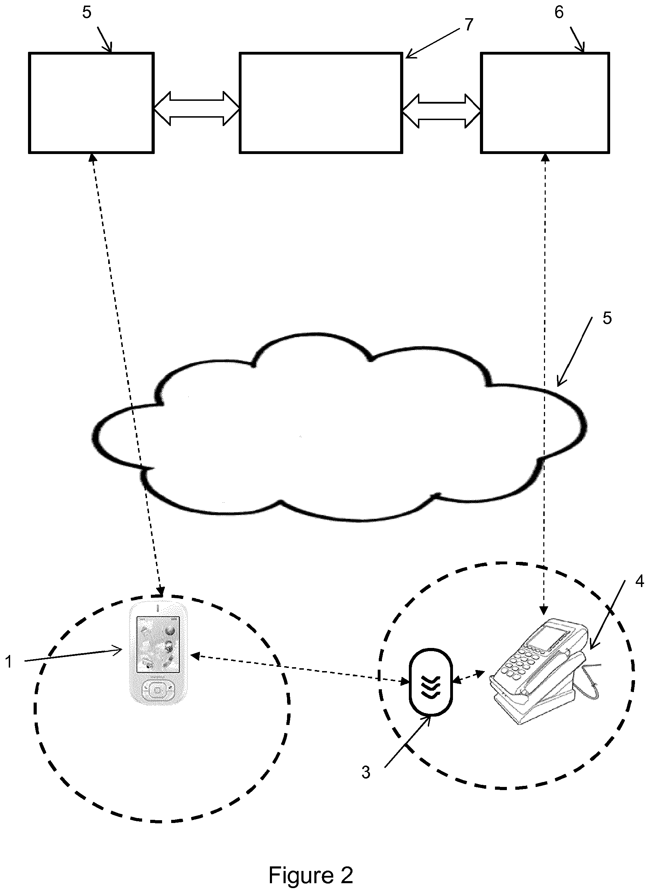

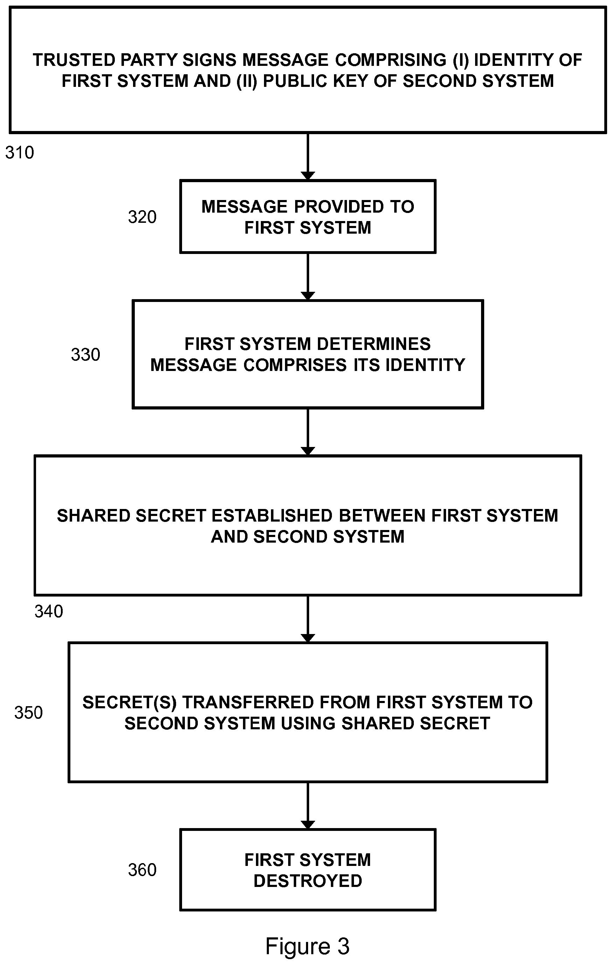

Specific embodiments of the invention will be described below with reference to the Figures. The approach taken to refreshing white boxes is applicable to any form of computing device, but it has particular utility for mobile computing devices such as smart phones, and relevance to applications such as mobile banking. Given this relevance, Figure 1 shows relevant elements of a mobile computing device in the form of a smart phone suitable for use in a mobile banking environment shown in Figure 2. The smart phone of Figure 1 is suitable for implementation of embodiments of the invention as described with reference to Figures 3 to 5.

Figure 1 shows schematically relevant parts of a representative hardware and software architecture for a mobile computing device suitable for implementing an embodiment of the invention. In the example shown, each mobile computing device is a mobile cellular telecommunications handset ("mobile phone" or "mobile device") - in other embodiments, the computing device may be another type of computing device such as a laptop computer or a tablet and the computing device need not have cellular telecommunications capabilities.

Mobile phone 1 comprises an application processor 12, one or more memories 13 associated with the application processor, a SIM or USIM 14 itself comprising both processing and memory capabilities and a NFC controller 15. The mobile phone also has a display 16 (shown as an overlay to the schematically represented computing elements of the device), providing in this example a touchscreen user interface. The mobile phone is equipped with wireless telecommunications apparatus 17 for communication with a wireless telecommunications network and local wireless communication apparatus 18 for interaction by NFC.

In the arrangement shown, the application processor 12 and associated memories 13 comprise (shown within the processor space, but with code and data stored within the memories) a mobile banking application 101 - explicitly shown within the memories 13 is a white box 102 (an instantiation of a white box cryptography application). The application processor 12 and associated memories 13 define a main operating environment of the mobile phone 1, with a generic operating system (such as iOS or Android). The operating environment will also contain other applications normally needed by such a device, such as a browser 103 and a modem 104. The SIM/USIM 4 may comprise a security domain 105 adapted to support cryptographic actions and an NFC application 106 which interfaces with the NFC controller 15, which has interfaces 107 to NFC devices and tags - a contactless front end 108 may be provided here, interacting with a cardlet associated with the payment application 1. The SIM/USIM 14 will typically be physically and logically protected against subversion. However, it should be noted that the payment application 101 and the white box 102 are both located within the main operating environment - neither rely on the security domain 105 provided within the SIM/USIM 104 or on any other security domain protected by secure hardware.

Before describing white box refresh, the indicated context of use with a mobile banking application will be briefly discussed. Figure 2 indicates how a mobile phone 1 with a mobile banking application (this may be a payment application, or may allow the user other interaction with an issuing bank) may interact with other elements in a banking ecosystem. In the arrangement shown here, mobile phone 1 is used as a payment device for contactless payments with POI (point of interaction) terminals (such as a POS - point of sale - terminal) under protocols such as those defined by EMVCo (current EMV specifications are set out at https://www.emvco.com/specifications.aspx).

A user (not shown) is provided with a payment device in the form of a mobile computing device - this is shown here as mobile phone 1, but may for example be a laptop computer or a tablet. The mobile phone 1 is adapted to act as a proxy for a physical payment card (or may be used for a virtual payment card with no direct physical counterpart). The mobile phone 1 equipped with means to communicate with other elements of a payment infrastructure, in that it comprises antennae and associated hardware and software to enable communication by NFC and associated contactless card protocols such as those defined under ISO/IEC 14443.

Other computer equipment in the infrastructure is typically fixed, such as point of interaction (POI) terminals 4, of which the example shown is a point-of-sale (POS) terminal used by a merchant interacting with the user. The POS terminal 4 interacts with the mobile phone 1 through contactless card reader 3. The merchant POS terminal 4 is typically connected or connectable to an acquiring bank 6 or other system in a secure way (either through a dedicated channel or through a secure communication mechanism over a public or insecure channel). There may also be a mechanism to allow connection between the mobile phone 1 (or another user computing device) and a card issuing bank 5 or system associated with the user. A banking infrastructure 7 will also connect the card issuer 5 and the acquiring bank 6, allowing transactions to be carried out between them. This banking infrastructure will typically be provided by a transaction card provider who provides transaction card services to the card issuing bank 5. The banking infrastructure 7 provides authorization at the time of purchase, clearing of the transaction and reconciliation typically within the same working day, and settlement of payments shortly after that. The banking infrastructure 7 comprises a plurality of switches, servers and databases, and is not described further here as the details of the banking infrastructure used are not necessary for understanding how embodiments of the invention function and may be implemented.

The requirements for contactless card transactions and associated protocols are described in more detail in the EMV Contactless Specifications for Payment Systems, available from https://www.emvco.com/specifications.aspx?id=21, to which the skilled person is directed. These will not be discussed in further detail here, as the specific protocols used are not relevant to the implementation of embodiments of the invention.

For these purposes, it is sufficient to note that in embodiments the mobile banking application 101 will use the white box 102 to ensure the secure retention of data that is extremely sensitive to the user, and which may also be highly sensitive to other parties such as the card issuer 5. It is therefore necessary that the mobile payment application 101 and the white box 102 exist, and operate, in such a way that this sensitive data is not exposed to malicious third parties. As the mobile payment application 101 and the white box 102 are located in the memories 13 associated with the main processor 12, this provides a significant technical challenge as the normal technical solution of keeping such sensitive data in a physically protected region (such as SIM/USIM 14) is not available. One approach to using white box cryptography to retain secrets for a mobile banking application is set out in the present applicant's earlier application published as WO 2015/32244. However, it should be noted that other mechanisms to those discussed in WO 2015/132244 may be provided for using a white box with a mobile banking application (or any other type of application), and the use of the approach described below is exemplary rather than in any way conditional upon any of the arrangements shown in WO 2015/132244.

More generally, white box cryptography is applicable in cases where a process E requires the use of one or more keys K, but where E needs to run in an environment where subversion or scrutiny is possible and so there is consequently a danger of exposing K. In the context of a mobile banking application, for example, where E is part of, or is used by, such an application it will typically be necessary for the process to be provisioned with one or more keys by the card issuer or on the card issuer's behalf to allow the user to be authenticated to the card issuer as the legitimate cardholder. In this conventional model, the card issuer may use a card issuer key K_{ISS} to derive a discrete device key K_{D} for each mobile computing device, for example by using the mobile fingerprint along with K_{ISS} as inputs to a key derivation algorithm. In a transaction, the device key K_{D} may then be used to generate a session key K_{S} for use in that transaction (or for part of a transaction) using a further key derivation process, for example by using the application sequence counter (ASC) of the mobile application as an input as well as K_{D}. This approach protects K_{ISS} as this key does not need to be transmitted anywhere by the issuer, provides a discrete device key K_{D} for each mobile computing device which is protected within the secure element, and in transaction operations uses a session key K_{S} which if discovered by a malicious third party should not affect future transactions.

If process E operates in an open environment, inputs and outputs of the process may be visible to third parties, but also keys K may be visible. Intermediate stages in the execution of E are also visible - this means that if not already known, process E can typically be reverse engineered to leave every part of this process known. This is known as a "white box" model - where reverse engineering is possible, there is no apparent security at all. Security within this model can be enhanced by subsuming keys K within process E in such a way that neither are susceptible to effective interception by an attacker. This is done by going beyond the basic "white box" model to prevent reverse engineering by use of white-box cryptography - general principles of white box cryptography are described, for example, in "On White-Box Cryptography" by Marc Joye in A. Elçi, S.B. Ors, and B. Preneel, Eds, "Security of Information and Networks", pp. 7-12, Trafford Publishing, 2008, and commercial white box implementations of widely used cryptographic algorithms are available. The goal of white box cryptography (WBC) is to implement a cryptographic algorithm E(K) in software in such a way that cryptographic assets - keys and secret equivalent transformations -- remain secure even when the attacker has access to the software. Further detail of WBC use in this context is set out in WO 2015/132244.

As noted above, when the existing white box is in use, it will be holding or verifying information for the mobile banking application under one or more existing keys. While these keys will not be apparent from the white box because of its structure, they (and other information protected by the white box) will become increasingly vulnerable over time as the white box remains in an open environment and is potentially exposed to attack. To reduce this risk, it is desirable to replace the white box instantiation in use with a new white box.

While it is possible not to do so, it is desirable when changing the white box also to change the key (or keys) because if it remains the same, then benefits of the change may be lost. As noted above, a conventional approach to this would be to program the new white box with both the existing keys and with new keys, though this would require the white box creating system to manage keys for all white boxes. Embodiments of the invention provide a different approach, as shown in Figure 3.

In this approach, it is not necessary for a white box creating system to have responsibility for key management, as using this approach secrets can be transferred from an existing white box to a new white box in a secure manner. In this approach at least the white box to be replaced has an identity (to allow successive replacement it would be desirable for replacement white boxes used for this purpose to have identities too), and there needs to be a trusted party trusted by at least the existing white box (again, preferably also trusted by replacement white boxes.

The trusted party signs 310 using its private key a message comprising the identity of the existing white box and a public key of the replacement white box. This message is provided to the existing white box (typically by the replacement white box or together with its installation) 320, and the existing white box uses the trusted party public key to determine 330 that the signed message comprises its identity. The existing white box and the replacement white box then establish 340 a shared secret using the replacement white box public key in the signed message. This shared secret is used for secure transfer 350 of the secrets held by the existing white box to the replacement white box, after which the existing white box can be destroyed 360.

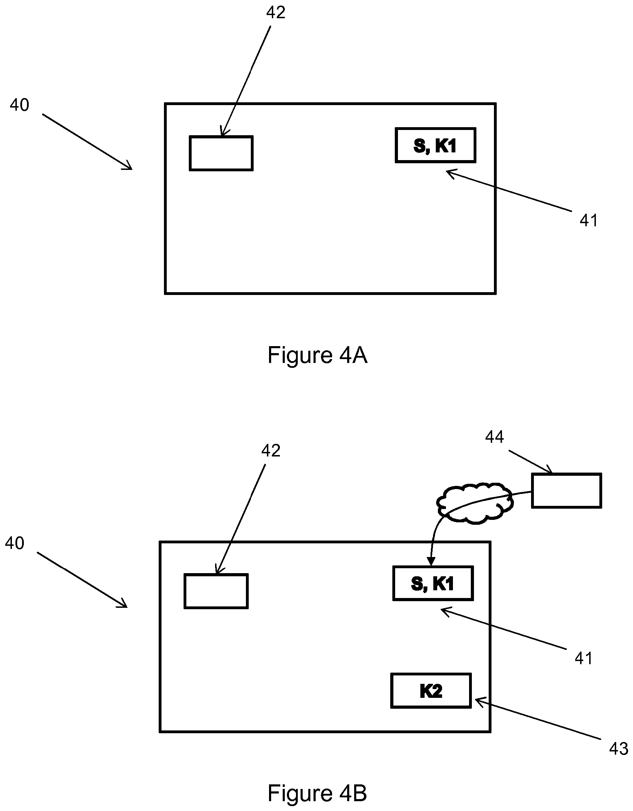

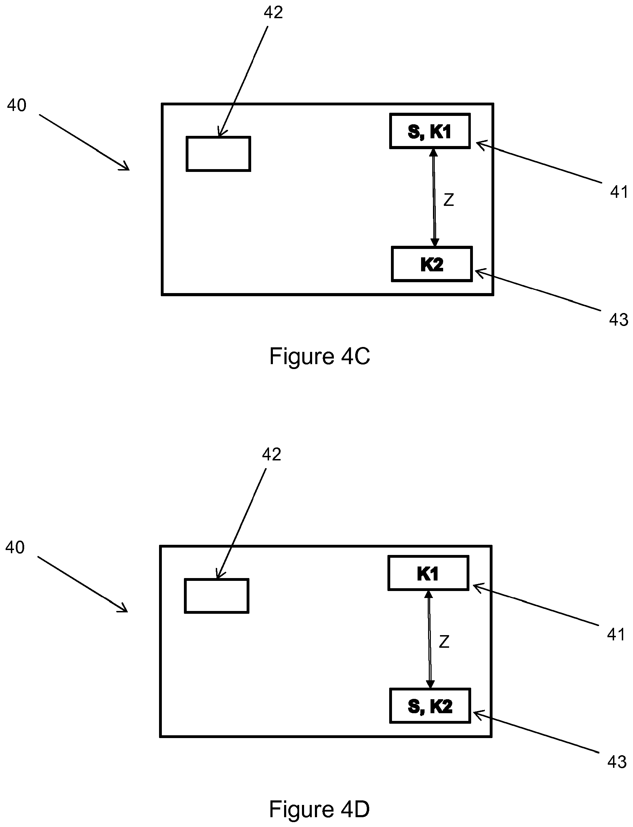

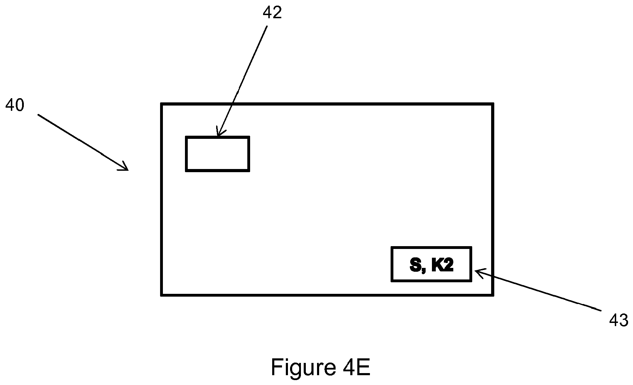

The basic model is illustrated schematically in Figures 4a to 4e. The situation before refresh is shown in Figure 4a - operating environment 40 contains a first white box 41 containing (or otherwise securing) secrets S used by application 42 also in the operating environment under key K1. As shown in Figure 4b, a second white box 43 is installed into the operating environment 40 - this second white box 43 does not have secrets S and has its own key K2. On installation of the second white box 43 the first white box 41 is provided with a message indicating that it is to be replaced, the message being or comprising a message signed by a trusted third party 44, the message comprising the first white box identity and the second white box public key. The first white box 41 uses the public key of the trusted third party to establish the contents of the signed message and then uses the public key of the second white box 43 to establish a shared secret Z using a Diffie-Hellman protocol (Figure 4c). The shared secret Z provides the basis for a secure communication path between the first white box 41 and the second white box 43, used to transfer the secrets S to the second white box 43 where they are secured under key K2 (Figure 4d). The first white box 41 communicates with the application 42 to indicate that it has been replaced by the second white box 43, and when the relationship between the application 42 and the second white box 43 has been established the first white box 41 is deleted.

This approach differs from that used in a traditional public key infrastructure (PKI) system. In traditional PKI, a signature is used to bind together an entity's identity with its public key. In this approach, by contrast, the signature is used not to indicate that the key belongs to a specific (identified) entity, but rather to indicate to an entity that it is permitted to share its secrets with the entity possessing the corresponding public key.

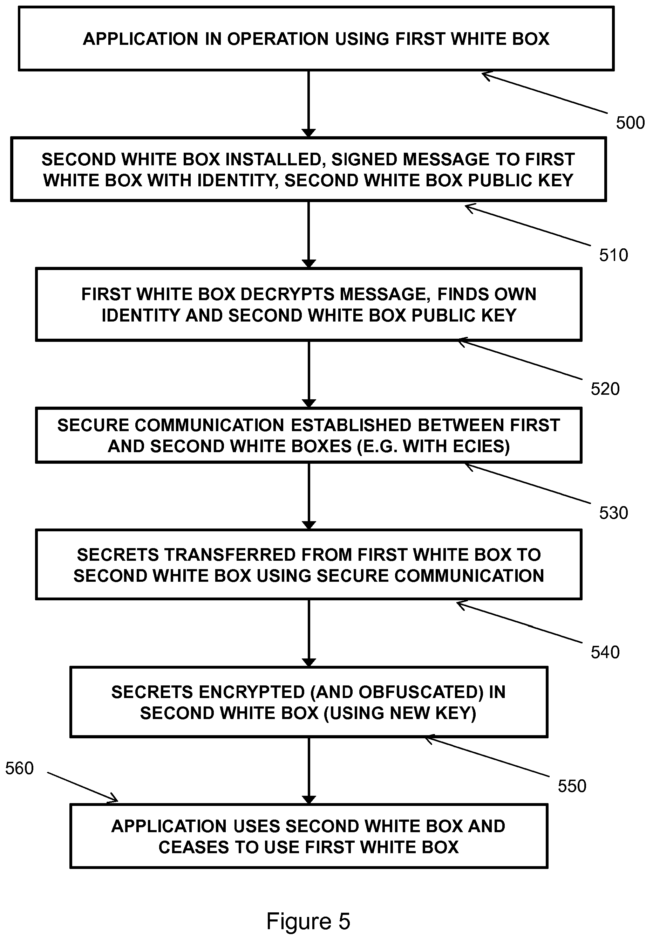

Process steps in a specific embodiment of the invention are described in more detail below with reference to Figure 5. The initial state, shown as step 500, is for the application and the first white box to be in operation in the operating environment. As noted above, one case of interest is for a payment application interacting with a white box adapted to secure secrets and sensitive information used by the payment application. The payment application and the white box exist in a conventional operating environment (such as iOS or Android for a mobile phone implementation). The payment application may in principle be of any type that can be used in that operating environment (proprietary examples include Apple Pay and Google Pay), and the white box may be prepared using known approaches (such as in the references indicated above) or from white box cryptographic suppliers (such as Metaforic Whitebox provided by Inside Secure). An exemplary use of a white box for a payment application may be in generation of a message authentication code (MAC) as required under the ISO/IEC 9797 standard implemented in EMVCo specifications - this is based on the 3DES standard symmetric-key block cipher. The white box here may simply implement the 3DES MAC algorithm, but with code that is obfuscated so that while the correct output is produced, decompilation does not reveal how the output is reached. The present invention does not rely on any particular type of white box implementation, but is generally relevant to the replacement of one white box by another. A further possibility is for multiple white boxes to be used for different algorithms, or for a white box based database to be used as in WO 2015/132244. In embodiments of the invention, the white box must have an identity, and must also have certain capabilities as indicated below.

In step 510, the second white box is installed in the operating environment and a signed message is provided to the first white box. As discussed above, the signed message contains the identity of the first white box and a public key of the second white box - the second white box has a key pair used for the refresh process (this may be one of several key pairs held by the second white box - it may be used for other purposes or limited to the purpose of white box refresh). As noted below, in particular embodiments elliptic curve cryptography is used (though essentially the same steps may be followed with any other asymmetric key cryptographic technique). At this point, the second white box is functional, but it is not performing any function for the payment application (which is still using the first white box). The signed message may be provided by the second white box to the first white box, or delivered directly to the first white box as part of the installation process of the second white box.

A particularly effective way to do this is to use the elliptic curve signature algorithm (ECDSA) to produce a signature covering the identity of the first whitebox and the public key of the second whitebox, with the signature made by a trusted third party trusted by all the whiteboxes. This may be, for example, a trusted third party associated with or trusted by the white box provider, with a part of the white box provision operation for the second white box being arranging this signature process and then equipping the second white box with the signed message. This does not require key management from the white box provider, but only knowledge of the identity of the white box to be replaced.

In step 520, the first white box decrypts the signed message using the public key of the trusted party that signed the message, and discovers its own identity and the public key of the second white box. The message may include further information to indicate to the first white box that it is to be replaced by the second white box, but in any event the result of the decryption process is to initiate a process between the first white box and the second white box to enable the second white box to replace the first white box. The first white box is ready to initiate this process as it trusts the trusted third party, and hence the indication

In step 530, the first white box establishes secure communication between it and the second white box. As the skilled person will appreciate, there are several ways in which this can be done, generally based on the establishment of a shared secret between the two white boxes. One such approach is IES (Integrated Encryption Scheme) - where elliptic curve cryptography is used, this would be ECIES. This scheme used the Diffie Hellman approach to establishment of a shared secret and includes a key derivation function and an encipherment algorithm. The shared secret is established by each white box using its own private key and the public key of the other white box in accordance with the Diffie Hellman approach, and the ECIES key derivation function is used to establish a session key for secure communication between the white boxes.

In step 540, secrets S used by the first white box for the payment application are transferred from the first white box by secure transfer using the session key to the second white box. The secrets may be decrypted before transfer over the secure channel to the second white box.

These secrets are then encrypted at the second white box (step 550) using a second white box key - this may be a different key from that used to establish communication between the two white boxes. The key and associated secrets should be held in an obfuscated form, and additional processes to achieve obfuscation may take place at this point. It is desirable for security that the keys used to secure secrets in the second white box are different from those used in the first white box.

The second white box is now ready to replace (step 560) the first white box in its role supporting the payment application. The payment application may be informed of this by message from the first white box, or may require a message provided by the trusted third party to indicate the transfer (possibly containing the identity of the second white box). When an appropriate message has been received, the payment application will replace calls to the first white box with calls to the second white box and where required indicate to relevant systems (the white boxes, the operating system) that it has done so.

At this point, the first white box has been replaced. It may be desirable for the second white box to perform a test operation to make sure that it is working effectively at this point. If the replacement is satisfactory, the first white box can then be deleted as fully as possible as it still contains secrets that may be used by the payment application (even though they are not used through the first white box) so should be treated as a potential security hazard.

The method of transferring secrets described above is described in the context of a second white box replacing a first white box used by a mobile payment application on a mobile computing device such as a mobile phone, but it is clearly not limited to this specific context and is potentially relevant to a much wider range of situations in which a white box needs to be refreshed. For example, this approach may not only be used any other mobile computing device (such as a notebook computer or tablet) but on essentially any other computing device running an application that may require a white box. Such an application may be a payment application, but may also be any other application that runs in a main processing environment but which needs to maintain secrets (such as a biometric verification application, for example, or a travel pass application).

## Claims

1. A method of transferring secrets from a first cryptographic system installed on a computing device to a second cryptographic system installed on the computing device to enable the second cryptographic system to replace the first cryptographic system, where the first cryptographic system has an identity, and wherein a trusted party is trusted by the first cryptographic system at least and has a trusted party private key and a corresponding trusted party public key, the method comprising:
the second cryptographic system providing (320) a signature under the trusted party private key of the first cryptographic system identity and a second cryptographic system public key, the second cryptographic system having a corresponding second cryptographic system private key;
the first cryptographic system confirming (330) that the signature comprises the identity, and either:
the first cryptographic system using a first cryptographic system private key and the corresponding second cryptographic system public key to establish (340) a shared secret with the second cryptographic system; or
the second cryptographic system using the second cryptographic system private key and a corresponding first cryptographic system public key to establish (340) a shared secret with the first cryptographic system; and
the first cryptographic system and the second cryptographic system using the shared secret to transfer (350) one or more secrets from the first cryptographic system to the second cryptographic system, the one or more secrets being decrypted before transfer;
wherein an application installed on the computing device initially uses the first cryptographic system to perform at least one secure operation using the one or more secrets, and wherein the method further comprises the second cryptographic system replacing the first cryptographic system in performing the at least one secure operation; and
wherein the first and second cryptographic systems are white boxes in which keys and secrets are obfuscated.

2. The method of transferring secrets as claimed in claim 1, wherein the installed application is a payment application.

3. The method of transferring secrets as claimed in claim 2, wherein the payment application uses EMV protocols.

4. The method of transferring secrets as claimed in claim 1, further comprising the second cryptographic system obfuscating the secrets when received from the first cryptographic system.

5. The method of transferring secrets as claimed in any preceding claim, further comprising deleting the first cryptographic system after the secrets have been transferred to the second cryptographic system.

6. The method of transferring secrets as claimed in any preceding claim, wherein key pairs are created using elliptic curve techniques.

7. The method of transferring secrets as claimed in any preceding claim, wherein the shared secret is established using a Diffie-Hellman protocol.

8. The method of transferring secrets as claimed in any preceding claim, wherein the shared secret is used to transfer the one or more secrets using an Integrated Encryption Scheme implementation.

9. A computing device comprising a processor and a memory with a first cryptographic system installed thereon, wherein the computing device is adapted to transfer secrets from the first cryptographic system to a second cryptographic system installed thereon, wherein the first and second cryptographic systems are white boxes in which keys and secrets are obfuscated, by the method of claim 1.

10. The computing device as claimed in claim 9, further comprising an application installed on the computing device, wherein the application is adapted to use the first cryptographic system to perform at least one secure operation using the one or more secrets, and wherein the computing device is adapted for the second cryptographic system to replace the first cryptographic system in performing the at least one secure operation.

11. The computing device as claimed in claim 10, wherein the installed application is a payment application.

12. The computing device as claimed in claim 11, wherein the payment application uses EMV protocols.

## Patentansprüche

1. Verfahren zum Übertragen von Geheimcodes von einem ersten kryptografischen System, das auf einer Rechenvorrichtung installiert ist, zu einem zweiten kryptografischen System, das auf der Rechenvorrichtung installiert ist, um das zweite kryptografische System zu aktivieren, um das erste kryptografische System zu ersetzen, wobei das erste kryptografische System eine Kennung aufweist, und wobei eine vertrauenswürdige Partei wenigstens durch das erste kryptografische System als vertrauenswürdig eingestuft wird und einen privaten Schlüssel der vertrauenswürdigen Partei und einen entsprechenden öffentlichen Schlüssel der vertrauenswürdigen Partei aufweist, wobei das Verfahren Folgendes umfasst:
das zweite kryptografische System, das eine Signatur unter dem privaten Schlüssel der vertrauenswürdigen Partei der ersten kryptografischen Systemkennung und einem öffentlichen Schlüssel des zweiten kryptografischen Systems bereitstellt (320), wobei das zweite kryptografische System einen entsprechenden privaten Schlüssel des zweiten kryptografischen Systems aufweist;
das erste kryptografische System, das bestätigt (330), dass die Signatur die Kennung umfasst, und entweder:
das erste kryptografische System, das einen privaten Schlüssel des ersten kryptografischen Systems und den entsprechenden öffentlichen Schlüssel des zweiten kryptografischen Systems verwendet, um einen gemeinsamen Geheimcode mit dem zweiten kryptografischen System zu erstellen (340); oder
das zweite kryptografische System, das den privaten Schlüssel des zweiten kryptografischen Systems und einen entsprechenden öffentlichen Schlüssel des ersten kryptografischen Systems verwendet, um einen gemeinsamen Geheimcode mit dem ersten kryptografischen System zu erstellen (340); und
das erste kryptografische System und das zweite kryptografische System, die den gemeinsamen Geheimcode verwenden, um ein oder mehrere Geheimcodes von dem ersten kryptografischen System zu dem zweiten kryptografischen System zu übertragen (350), wobei das eine oder die mehreren Geheimcodes vor der Übertragung entschlüsselt werden;
wobei eine Anwendung, die auf der Rechenvorrichtung installiert ist, anfänglich das erste kryptografische System verwendet, um wenigstens einen sicheren Vorgang unter Verwendung des einen oder der mehreren Geheimcodes durchzuführen, und wobei das Verfahren femerdas zweite kryptografische System umfasst, das das erste kryptografische System beim Durchführen des wenigstens einen sicheren Vorgangs ersetzt; und
wobei das erste und das zweite kryptografische System weiße Kästen sind, in denen Schlüssel und Geheimcodes verschleiert sind.

2. Verfahren zum Übertragen von Geheimcodes nach Anspruch 1, wobei die installierte Anwendung eine Zahlungsanwendung ist.

3. Verfahren zum Übertragen von Geheimcodes nach Anspruch 2, wobei die Zahlungsanwendung EMV-Protokolle verwendet.

4. Verfahren zum Übertragen von Geheimcodes nach Anspruch 1, das ferner das zweite kryptografische System umfasst, das die Geheimcodes verschleiert, wenn sie von dem ersten kryptografischen System empfangen werden.

5. Verfahren zum Übertragen von Geheimcodes nach einem der vorhergehenden Ansprüche, das fernerein Löschen des ersten kryptografischen Systems umfasst, nachdem die Geheimcodes zu dem zweiten kryptografischen System übertragen wurden.

6. Verfahren zum Übertragen von Geheimcodes nach einem der vorhergehenden Ansprüche, wobei Schlüsselpaare unter Verwendung von elliptischen Kurventechniken erzeugt werden.

7. Verfahren zum Übertragen von Geheimcodes nach einem der vorhergehenden Ansprüche, wobei der gemeinsame Geheimcode unter Verwendung eines Diffie-Hellman-Protokolls erstellt wird.

8. Verfahren zum Übertragen von Geheimcodes nach einem der vorhergehenden Ansprüche, wobei der gemeinsame Geheimcode verwendet wird, um den einen oder die mehreren Geheimcodes unter Verwendung einer Implementierung eines integrierten Verschlüsselungsschemas zu übertragen.

9. Rechenvorrichtung, die einen Prozessor und einen Speicher mit einem darauf installierten ersten kryptografischen System umfasst, wobei die Rechenvorrichtung angepasst ist, um Geheimcodes von dem ersten kryptografischen System zu einem darauf installierten zweiten kryptografischen System zu übertragen, wobei das erste und das zweite kryptografische System weiße Kästen sind, in denen Schlüssel und Geheimcodes durch das Verfahren nach Anspruch 1 verschleiert sind.

10. Rechenvorrichtung nach Anspruch 9, die femer eine Anwendung umfasst, die auf der Rechenvorrichtung installiert ist, wobei die Anwendung angepasst ist, um das erste kryptografische System zu verwenden, um wenigstens einen sicheren Vorgang unter Verwendung des einen oder der mehreren Geheimcodes zu verwenden, und wobei die Rechenvorrichtung angepasst ist, damit das zweite kryptografische System das erste kryptografische System beim Durchführen des wenigstens einen sicheren Vorgangs ersetzt.

11. Rechenvorrichtung nach Anspruch 10, wobei die installierte Anwendung eine Zahlungsanwendung ist.

12. Rechenvorrichtung nach Anspruch 11, wobei die Zahlungsanwendung EMV-Protokolle verwendet.

## Revendications

1. Procédé de transfert de secrets d'un premier système cryptographique installé sur un dispositif informatique vers un second système cryptographique installé sur le dispositif informatique pour permettre au second système cryptographique de remplacer le premier système cryptographique, le premier système cryptographique ayant une identité, et un tiers de confiance étant au moins approuvé par le premier système cryptographique et ayant une clé privée de tiers de confiance et une clé publique de tiers de confiance correspondante, le procédé comprenant :
le second système cryptographique fournissant (320) une signature sous la clé privée de tiers de confiance de l'identité du premier système cryptographique et une clé publique de second système cryptographique, le second système cryptographique ayant une seconde clé privée de système cryptographique correspondante ;
le premier système cryptographique confirmant (330) que la signature comprend l'identité, et soit :
le premier système cryptographique utilisant une clé privée de premier système cryptographique et la clé publique de second système cryptographique correspondante pour établir (340) un secret partagé avec le second système cryptographique ; soit
le second système cryptographique utilisant la clé privée de second système cryptographique et une clé publique de premier système cryptographique correspondante pour établir (340) un secret partagé avec le premier système cryptographique ; et
le premier système cryptographique et le second système cryptographique utilisant le secret partagé pour transférer (350) un ou plusieurs secrets du premier système cryptographique au second système cryptographique, le ou les secrets étant déchiffrés avant le transfert ;
une application installée sur le dispositif informatique utilisant initialement le premier système cryptographique pour effectuerau moins une opération sécurisée utilisant le ou les secrets, et le procédé comprenant en outre le second système cryptographique remplaçant le premier système cryptographique en effectuant l'au moins une opération sécurisée ; et
les premier et second systèmes cryptographiques étant des boîtes blanches dans lesquelles les clés et les secrets sont obscurcis.

2. Procédé de transfert de secrets selon la revendication 1, l'application installée étant une application de paiement.

3. Procédé de transfert de secrets selon la revendication 2, l'application de paiement utilisant des protocoles EMV.

4. Procédé de transfert de secrets selon la revendication 1, comprenant en outre le second système cryptographique obscurcissant les secrets lorsqu'ils sont reçus du premier système cryptographique.

5. Procédé de transfert de secrets selon l'une quelconque des revendications précédentes, comprenant en outre la suppression du premier système cryptographique après que les secrets ont été transférés vers le second système cryptographique.

6. Procédé de transfert de secrets selon l'une quelconque des revendications précédentes, des paires de clés étant créées à l'aide des techniques de courbe elliptique.

7. Procédé de transfert de secrets selon l'une quelconque des revendications précédentes, le secret partagé étant établi à l'aide d'un protocole Diffie-Hellman.

8. Procédé de transfert de secrets selon l'une quelconque des revendications précédentes, le secret partagé étant utilisé pour transférer le ou les secrets à l'aide d'une mise en œuvre de schéma de cryptage intégré.

9. Dispositif informatique comprenant un processeur et une mémoire dotés d'un premier système cryptographique installé sur ceux-ci, le dispositif informatique étant adapté pour transférer des secrets du premier système cryptographique à un second système cryptographique installé sur celui-ci, les premieret second systèmes cryptographiques étant des boîtes blanches dans lesquelles clés et secrets sont obscurcis, par le procédé selon la revendication 1.

10. Dispositif informatique selon la revendication 9, comprenant en outre une application installée sur le dispositif informatique, l'application étant adaptée pour utiliser le premier système cryptographique pour effectuerau moins une opération sécurisée à l'aide du ou des secrets, et le dispositif informatique étant adapté pour que le second système cryptographique remplace le premier système cryptographique en effectuant l'au moins une opération sécurisée.

11. Dispositif informatique selon la revendication 10, l'application installée étant une application de paiement.

12. Dispositif informatique selon la revendication 11, l'application de paiement utilisant des protocoles EMV.
